# DEMANDE DE BREVET EUROPEEN

(11) **EP 1 721 942 A1**
(43) Date de publication de la demande: **15.11.2006**
(21) Numéro de dépôt: 06300453.5
(22) Date de dépôt: 11.05.2006
(51) Int. Cl.: C09D 5/00

(54) **Composition solide, destinée à accélérer le temps de séchage d'une peinture aqueuse, et procédés d'application correspondants**

(30) Priorité: 12.05.2005 FR 0551238
(71) Demandeur: COLAS, 92100 Boulogne-Billancourt (FR)
(72) Inventeur: Durand, Graziella, 78460 Chevreuse (FR); Bricout, Xavier, 78960 Voisins le Bretonneux (FR)
(74) Mandataire: Catherine, Alain

(57) **Abrégé**

L'invention concerne une composition solide, destinée à accélérer le temps de séchage d'une peinture aqueuse comprenant au moins un polymère hydrosoluble comportant des charges cationiques; dans laquelle ledit polymère est adsorbé sur un support solide sous forme de particules.
L'invention concerne également une peinture aqueuse comprenant une composition telle que définie ci-dessus, ainsi qu'un procéde d'application d'une telle peinture.

## Description

La présente invention se rapporte à une composition destinée à accélérer le temps de séchage des peintures aqueuses, en particulier les peintures aqueuses destinées aux marquages horizontaux. L'invention concerne également un procédé d'application d'une telle peinture aqueuse.

Les marquages horizontaux, notamment pour le tracé de marquage routier sont habituellement réalisés à partir d'une machine d'application équipée de pulvérisateurs de peinture et de distributeurs de billes réfléchissantes.

Afin de préserver l'environnement, mais également les usagers, des émanations des peintures routières à base de solvants, celles-ci sont progressivement remplacées par des peintures en phase aqueuse.

Or, les peintures solvantées (à base de solvant) présentent l'avantage de sécher très rapidement, les solvants utilisés étant plus volatiles que l'eau, d'où une remise en circulation plus rapide que lorsque des peintures aqueuses sont utilisées. Les peintures aqueuses, même optimisées au niveau de leur formulation, présentent l'inconvénient de sécher lentement ce qui limite leur utilisation aux périodes chaudes et sèches.

En effet, dans les peintures aqueuses, la formation du film continu de peinture s'opère par évaporation de l'eau. Le temps de séchage est particulièrement long en cas de présence importante d'humidité dans l'air ambiant et lorsque la peinture est appliquée par température fraîche. Or, il est souhaitable que la remise en service de la chaussée soit rapide pour éviter les blocages de la circulation et faciliter le bon déroulement des diverses opérations de chantier.

Pour accélérer le temps de séchage de la peinture aqueuse, il a été proposé d'adjoindre des sels hydrosolubles. Cette réalisation est cependant peu efficace dans les cas très fréquents où les particules de liant sont stabilisées à la fois par des émulsifiants anioniques et par des émulsifiants non ioniques. Le temps de séchage n'est alors pas réduit de manière significative.

Il a également été proposé l'adjonction d'acide, de façon à réduire suffisamment le pH. En dessous d'un certain seuil de pH, les tensioactifs de charge anionique stabilisant la dispersion perdent leur caractère anionique en induisant une coagulation de la dispersion. L'efficacité de cette méthode dépend cependant beaucoup de la nature de l'émulsifiant anionique et décroît dans le cas d'une présence importante d'émulsifiants non ioniques. D'autre part, la présence d'acide contribue à un jaunissement accéléré de la peinture au cours du temps.

Enfin, il a été proposé dans la demande de brevet FR 2 781 494 d'adjoindre aux peintures aqueuses un accélérateur de temps de séchage, liquide, ou rupteur, à base de polymères hydrosolubles comportant des charges cationiques.

Néanmoins, la mise en oeuvre d'un rupteur liquide, tel que décrit ci-dessus, est difficile, peu précise, et ne donne pas de résultat satisfaisant.

Il existe donc un besoin permanent pour de nouveaux accélérateurs de temps de séchage destinés aux peintures aqueuses, à la fois efficace en ce qui concerne le temps de séchage de ces peintures et dont la mise en oeuvre est facilitée par rapport aux compositions antérieurement connues.

La présente invention a donc pour objet une composition solide destinée à accélérer le temps de séchage d'une peinture aqueuse, ladite composition comprenant au moins un polymère hydrosoluble comportant des charges cationiques et, ledit polymère étant adsorbé sur un support solide sous forme de particules. La composition selon l'invention, désignée « rupteur solide » ou encore « rupteur composite » permet d'obtenir un séchage rapide des peintures aqueuses au regard des méthodes existantes.

La composition selon l'invention permet également d'obtenir une résistance élevée contre l'usure et le vieillissement dû aux intempéries, et évite ainsi une dégradation de l'aspect de la peinture au cours du temps.

Par rapport à une peinture exempte de rupteur, le temps de séchage obtenu en utilisant le rupteur solide de l'invention est réduit dans des proportions très importantes, de l'ordre de 5 à 50 fois selon la nature du couple peinture/rupteur solide, selon le dosage en rupteur solide, et les conditions climatiques.

La composition selon l'invention peut être ajoutée à une couche de peinture dont l'épaisseur est inférieure ou égale 800 µm, et de préférence de l'ordre de 400 µm, ou à un revêtement plus épais de type enduit, dont l'épaisseur est supérieure à 800 µm.

L'exemple 1 fait apparaître l'évolution du temps de séchage en fonction du type de peinture utilisé, du type de rupteur, du dosage en rupteur, et de l'épaisseur du film de revêtement.

De plus, par rapport à une application par pulvérisation de rupteur dans sa forme liquide, l'utilisation d'une composition selon l'invention, comprenant un polymère adsorbé sur un support solide, permet une mise en oeuvre facilitée, un réglage plus précis et moins fluctuant, et une compatibilité bien meilleure avec le feuil de peinture, notamment au niveau de l'aspect de surface.

La libération progressive et prolongée du polymère hydrosoluble au travers de la matrice solide permet d'obtenir une excellente compatibilité avec le feuil de peinture, au point qu'il est quasiment impossible de relever son utilisation quelques jours après application par observation de l'état de surface.

De plus, la composition selon l'invention, comprenant un polymère hydrosoluble adsorbé sur un support solide, sous forme de particules, permet une libération progressive dudit polymère, et le cas échéant, un enfoncement optimal des billes de verres appliquées par saupoudrage. En outre, la composition telle que définie ci-dessus ne provoque pas de fragilisation du feuil de peinture, ni en surface, ni à l'interface entre la peinture et les billes de verre, lorsque ces dernières sont utilisées. Il en résulte d'excellentes performances au niveau de la tenue à l'usure sous trafic dans la majorité des cas. L'enchâssement des billes de verre est effectif et durable, ce qui permet de maintenir un bon niveau de rétroréflexion.

L'adjonction d'une composition telle que définie ci-dessus à une peinture aqueuse, permet également de conférer à ladite peinture une meilleure tenue à l'eau au jeune âge et permet donc de réduire les risques de redispersion si une forte intempérie survient peu de temps après l'application. (Exemple 2)

De préférence, ledit polymère hydrosoluble est choisi parmi les polychlorures métalliques, tel que le polychlorure d'aluminium et les polyoxychlorures métalliques, tel que le polyoxychlorure de fer.

Alternativement, ledit polymère hydrosoluble est choisi parmi les polymères azotés et notamment les polymères de synthèse dérivés du polyacrylamide.

Avantageusement, lesdites particules possèdent une capacité de prise d'huile supérieure ou égale à 200 ml pour 100 g DOP (dioctylphtalate).

Avantageusement, lesdites particules possèdent une taille variant de 1µm à 1000µm et de préférence de 10µm à 500µm. A titre d'exemple, lesdites particules peuvent être constituées de silices pyrogénés, de silices cristallines, de silices précipités, de silicates, de sulfates de carbonates, de caolin, de talc, ou encore de diatomées, et leurs mélanges.

Avantageusement, la composition de l'invention comprend au moins 50 % en poids de polymère hydrosoluble, et de préférence de 60 à 80 % en poids de polymère hydrosoluble, par rapport au poids de la composition.

L'invention concerne également une peinture aqueuse comprenant :
- des particules minérales,
- un liant polymère en dispersion aqueuse,
- un dispersant constitué d'un agent de polymérisation en émulsion
   et,
- une composition destinée à accélérer le temps de séchage, comprenant elle-même au moins un polymère hydrosoluble comportant des charges cationiques et dans laquelle ledit polymère est adsorbé sur un support solide sous forme de particules.

De manière tout à fait préférée, le dispersant comprend des émulsifiants non ioniques et/ou anioniques, et le liant polymère est de type acrylique, styrène-acrylique, et/ou vinylacrylique.

Enfin, la composition selon l'invention, sous forme solide, a permis de mettre au point de nouveaux procédés d'application d'une peinture aqueuse sur un support, comprenant les étapes suivantes :
- incorporer une composition telle que définie ci-dessus, et
- pulvériser ladite peinture sur le support.

L'invention concerne également un procédé d'application d'une peinture aqueuse sur un support, comprenant les étapes suivantes :
- pulvériser la peinture aqueuse sur le support, et
- appliquer une composition conforme à l'invention sur la couche de peinture pulvérisée.
Ledit procédé pouvant également comprendre les étapes suivantes :
- pulvériser la peinture aqueuse sur le support,
- appliquer des billes réfléchissantes sur la peinture et
- appliquer une composition conforme à l'invention sur la peinture et les billes.

Alternativement, le procédé d'application d'une peinture selon l'invention comprenant les étapes suivantes :
- pulvériser la peinture aqueuse sur le support,
- appliquer une composition conforme à l'invention sur la peinture et les billes, et
- appliquer des billes réfléchissantes sur la peinture.

Le procédé d'application selon l'invention peut en outre comprendre les étapes supplémentaires suivantes (application bicouches) :
- pulvériser une couche de peinture aqueuse supplémentaire et
- appliquer des billes réfléchissantes sur ladite couche supplémentaire.
L'invention sera mieux comprise à la lecture des exemples non limitatifs ci-après, qui se réfèrent aux figures annexées représentant, respectivement :
Figure 1 : un graphique représentant l'évolution de la tenue à l'eau de peintures aqueuses comprenant ou non, un rupteur, en fonction du temps de séchage.
   L'essai présenté a été réalisé dans les conditions suivantes:
   - épaisseur de peinture: 400 µm
   - grammage rupteur: 70 g/m2
   - température ambiante: 10°C
   - humidité relative: 65%
   - température de l'eau: 18°C
   - débit eau: 61 L/h
Figure 2 : un graphique représentant l'évolution de l'usure de peintures aqueuses comprenant ou non, un rupteur, en fonction du nombre de passage de roues.
   L'essai présenté a été réalisé dans les conditions suivantes:
   - peinture A: 700 g/m²
   - billes de verre: 350 g/m²
   - grammage rupteur: 70 g/m²

### Exemple 1 : Effet de la composition de l'invention sur le temps de séchage

La mesure du temps de séchage est réalisée selon le test BK (Beck Koller) qui permet de suivre les différentes étapes du séchage des films de peinture par la mesure de l'empreinte laissée par le passage d'une aiguille de laiton à vitesse constante. Le point « D » caractérise la fin de la phase de durcissement à coeur, permettant de garantir la « roulabillité » sur le produit sans arrachement.

### Exemple 1.A

Dans cet exemple le dosage en rupteur composite varie de 0 à 200 g/m². L'épaisseur du revêtement de peinture aqueuse est constante et égale à 400 µm (soit environ 700 g/m²). 5 peintures aqueuses routières font l'objet de l'essai.

Peintures à 400 µm (sans rupteur) :
T°C=10°C ; HR = 90% ; Vair : 1,1-1,2 m/s

| Peinture | Epaisseur peinture (µm) | **Temps de séchage « D » (en min)** |
|---|---|---|
| A | 400 | 95 |
| B | 400 | 52 |
| C | 400 | 149 |
| D | 400 | 97 |
| E | 400 | 137 |

Peintures à 400 µm + rupteur composite rupteur à 40g/m² (soit environ 6% en poids) :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 40 | 21 |
| B | 400 | 40 | 13,1 |
| C | 400 | 40 | 32,5 |
| D | 400 | 40 | 23 |
| E | 400 | 40 | 8 |

Peintures à 400µm + rupteur composite rupteur à 100g/m² (soit environ 14% en poids) :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 100 | 9 |
| B | 400 | 100 | 4,3 |
| C | 400 | 100 | 8,5 |
| D | 400 | 100 | 7 |
| E | 400 | 100 | 3 |

Peintures à 400µm + rupteur composite rupteur à 200g/m² (soit environ 28% en poids) :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 200 | 15,4 |
| B | 400 | 200 | 8,5 |
| C | 400 | 200 | 7,3 |
| D | 400 | 200 | 3,7 |
| E | 400 | 200 | 2,8 |

On constate que le gain au niveau du temps de séchage est très important par rapport aux peintures exemptes de rupteur, dès l'addition de 40 g/m² de rupteur composite et continue à s'accroître jusqu'à 100g/m². II n'évolue plus tellement au-delà.

On observe que le gain en temps de séchage est particulièrement efficace (dosage en rupteur : 40 et 100 g/m²) avec les peintures B et D.

### Exemple 1.B

Dans cet exemple, le dosage en rupteur composite est identique et égal à 100g/m². Seule l'épaisseur du revêtement de peinture aqueuse varie de 250 à 700 µm. Application du rupteur par saupoudrage.

Peintures à 250 µm (environ 450 g/m²) + rupteur à 100g/m²:
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 250 | 100 | 3,2 |
| B | 250 | 100 | 1,5 |
| C | 250 | 100 | 3,3 |
| D | 250 | 100 | 1,5 |
| E | 250 | 100 | 2 |

| | | | |
|---|---|---|---|
| Témoin sans rupteur : Temps de séchage moyen 60 minutes | | | |

Peintures à 400 µm (environ 700 g/m²) + rupteur à 100g/m² :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 100 | 9 |
| B | 400 | 100 | 4,3 |
| C | 400 | 100 | 8,5 |
| D | 400 | 100 | 7 |
| E | 400 | 100 | 3 |

| | | | |
|---|---|---|---|
| Témoin sans rupteur : Temps de séchage moyen 100 minutes | | | |

Peintures à 700 µm (environ 1200 g/m²) + rupteur à 100g/m² :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 700 | 100 | 47 |
| B | 700 | 100 | 31 |
| C | 700 | 100 | 32 |
| D | 700 | 100 | 29 |
| E | 700 | 100 | 5 |

| | | | |
|---|---|---|---|
| Témoin sans rupteur : Temps de séchage moyen 140 minutes | | | |

Comme on le voit, l'influence du rupteur composite augmente avec la diminution du grammage de peinture aqueuse. Cependant, même à très forte épaisseur (700µm) le gain en temps de séchage reste très important (plus de 70%).

### Exemple 1.C

Temps de séchage (point d) des peintures en fonction du type de rupteur composite : 2 d'entre eux sont testés ; ils diffèrent essentiellement par la granulométrie du substrat minéral (60µm pour rupteur 1, et 250 µm pour rupteur 2, tous 2 à base de silice précipitée).

Peintures à 400 µm + rupteur 2 à 40g/m² :
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 40 | 18,3 |
| B | 400 | 40 | 14 |
| C | 400 | 40 | 36 |
| D | 400 | 40 | 30,5 |
| E | 400 | 40 | 6 |

Peintures à 400 µm + rupteur 1 à 40g/m²:
T°C=10°C ; HR = 68% ; Vair : 1,1-1,2 m/s

| Peinture | Epaisseur peinture (µm) | Grammage rupteur (g/m²) | **Temps de séchage « D » (en min)** |
|---|---|---|---|
| A | 400 | 40 | 21 |
| B | 400 | 40 | 13,1 |
| C | 400 | 40 | 32,5 |
| D | 400 | 40 | 23 |
| E | 400 | 40 | 8 |

Il n'y a pas de différence significative entre ces 2 types de rupteur en terme de temps de séchage ; la bille plus grossière est cependant préférable en terme d'applicabilité : meilleure coulabilité et meilleur départ après application.

### EXEMPLE 2 : Effet sur les performances du feuil de peinture

### Exemple 2.A. Tenue à l'eau

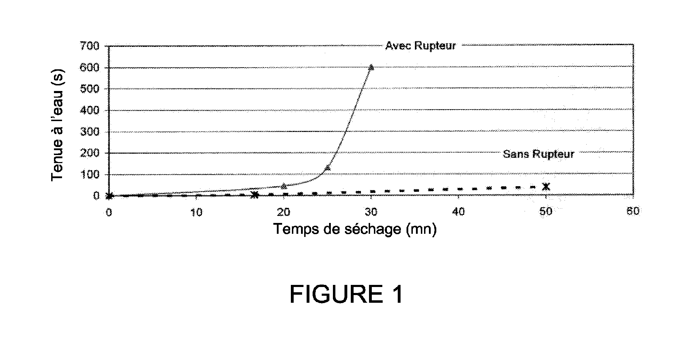

L'essai de tenue à l'eau consiste à soumettre un film de peinture, après séchage apparent, sous un filet d'eau afin de mesurer combien de temps il est capable de résister sans laisser apparaître le support sur lequel il adhère (figure 1).

Ce résultat montre que l'adjonction de rupteur permet de procurer à la peinture une meilleure tenue à l'eau, c'est-à-dire une résistance du film plus importante à l'initial.

### Exemple 2.B. Résistance à l'usure

La résistance à l'usure est évaluée par le suivi de la rétroréflexion RL (mCd/Ix/m²) en fonction du nombre de passages de roues au simulateur de trafic.

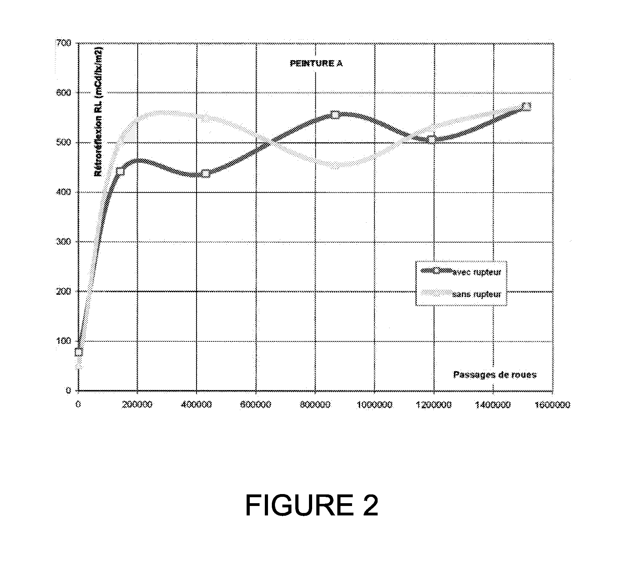

En application standard, l'ajout de rupteur solide par saupoudrage n'induit pas d'usure supplémentaire par rapport à la peinture exempte de rupteur (figure 2).

Dans le cas d'une application VNTP, c'est-à-dire en couches épaisses (600 à 700 µm de peinture fraîche soit environ 1000 à 1200 g/m²), la mise en oeuvre du rupteur solide par saupoudrage après la bille peut provoquer l'apparition d'un cracking au détriment de la tenue à l'usure.

II convient dans ce cas de procéder à une application de peinture en bicouche avec agent de rupture entre les deux couches tel que cela a été décrit ci-dessus, pour diminuer ce phénomène et grandement améliorer la tenue à l'usure sous circulation.

## Revendications

1. Composition solide destinée à accélérer le temps de séchage d'une peinture aqueuse comprenant au moins un polymère hydrosoluble comportant des charges cationiques, **caractérisée en ce que** ledit polymère est adsorbé sur un support solide sous forme de particules.

2. Composition selon la revendication 1, **caractérisé en ce que** ledit polymère hydrosoluble est choisi parmi les polychlorures métalliques et les polyoxychlorures métalliques.

3. Composition selon la revendication 1, **caractérisé en ce que** ledit polymère hydrosoluble est choisi parmi le polychlorure d'aluminium, et le polyoxychlorure de fer.

4. Composition selon la revendication 1, **caractérisé en ce que** ledit polymère hydrosoluble est choisi parmi les polymères azotés, et notamment, les polymères de synthèse dérivés du polyacrylamide.

5. Composition selon l'une quelconque des revendications 1 à 4, **caractérisée en ce que** lesdites particules possèdent une capacité de prise d'huile supérieure ou égale à 200 ml pour 100g DOP (dioctylphtalate).

6. Composition selon l'une quelconque des revendications 1 à 5, **caractérisée en ce que** lesdites particules possèdent une taille variant de 1µm à 1000 µm, et de préférence de 10 µm à 500 µm.

7. Composition selon l'une quelconque des revendications 1 à 6, **caractérisée en ce que** lesdites particules sont constituées de silice pyrogénée, de silice cristalline, de silice précipitée, de silicate, de sulfate, de carbonate, de kaolin, de talc, ou encore de diatomées, et leurs mélanges.

8. Composition selon l'une quelconque des revendications 1 à 7, **caractérisée en ce qu'**elle comprend au moins 50% en poids, de polymère hydrosoluble, et de préférence, de 60% à 80% en poids, de polymère hydrosoluble, par rapport au poids de la composition.

9. Peinture aqueuse comprenant :
- des particules minérales,
- un liant polymère en dispersion aqueuse
- un dispersant constitué d'un agent de polymérisation en émulsion, et
- une composition destinée à accélérer le temps de séchage, comprenant elle-même au moins un polymère hydrosoluble comportant des charges cationiques, et dans laquelle ledit polymère est adsorbé sur un support solide sous forme de particules.

10. Peinture selon la revendication 9, **caractérisée en ce que** le dispersant comprend des émulsifiants non ioniques et/ou anioniques.

11. Peinture selon la revendication 9 ou 10, **caractérisée en ce que** le liant polymère est de type acrylique, styrène-acrylique, et/ou vinylacrylique.

12. Procédé d'application d'une peinture aqueuse sur un support, comprenant les étapes suivantes :
- incorporer une composition conforme à l'une quelconque des revendications 1 à 8 dans une peinture aqueuse, et
- pulvériser ladite peinture sur le support.

13. Procédé d'application d'une peinture aqueuse sur un support, comprenant les étapes suivantes :
- pulvériser la peinture aqueuse sur le support, et
- appliquer une composition conforme à l'une quelconque des revendications 1 à 8 sur la couche de peinture pulvérisée.

14. Procédé d'application d'une peinture selon la revendication 13 comprenant les étapes suivantes :
- pulvériser la peinture aqueuse sur le support,
- appliquer des billes réfléchissantes sur la peinture et
- appliquer une composition conforme à l'une quelconque des revendications 1 à 8 sur la peinture et les billes.

15. Procédé d'application d'une peinture selon la revendication 13 comprenant les étapes suivantes :
- pulvériser la peinture aqueuse sur le support,
- appliquer une composition conforme à l'une quelconque des revendications 1 à 8 sur la peinture et les billes, et
- appliquer des billes réfléchissantes sur la peinture.

16. Procédé d'application selon l'une quelconque des revendications 13 à 15 comprenant les étapes supplémentaires suivantes :
- pulvériser une couche de peinture aqueuse supplémentaire et
- appliquer des billes réfléchissantes sur ladite couche supplémentaire.
